# FASCICULE DE BREVET EUROPEEN

(11) **EP 2 274 791 B1**
(45) Date de publication et mention de la délivrance du brevet: **10.02.2016**
(21) Numéro de dépôt: 09757715.9
(22) Date de dépôt: 11.05.2009
(51) Int. Cl.: H01M 4/04, H01M 4/24, H01M 4/52, H01M 4/74, H01M 12/08

(54) **ACCUMULATEUR FER-AIR A MEDIATEUR LITHIUM**
EISEN-LUFT-AKKUMUATOR MIT LITHIUMMEDIATOR
IRON-AIR ACCUMULATOR WITH LITHIUM MEDIATOR

(30) Priorité: 13.05.2008 FR 0853066
(43) Date de publication de la demande: 19.01.2011
(73) Titulaire: Electricité de France, 75008 Paris (FR)
(72) Inventeur: LASCAUD, Stéphane, F-77300 Fontainebleau (FR); STEVENS, Philippe, F-77940 Noisy Rudignon (FR)
(74) Mandataire: Cabinet Plasseraud
(86) Numéro de dépôt international: PCT/FR2009/050857
(87) Numéro de publication internationale: WO 2009/147339

(56) Documents cités:
- WO-A-2007/135331
- WO-A2-2007/111895
- US-A- 5 582 935
- US-A1- 2005 100 792
- US-A1- 2007 259 234

## Description

L'invention concerne un nouveau type de générateur électrochimique composé d'une électrode négative à matière active nanostructurée, d'un électrolyte solide conducteur d'ions lithium recouvrant la matière active de l'électrode, d'un électrolyte aqueux contenant des ions lithium ainsi que d'une électrode à air et d'une électrode de dégagement d'oxygène.

La densité d'énergie massique (exprimée en Wh/kg) des batteries reste la principale limitation pour leur utilisation dans les équipements portables, tels que l'électronique portable ou les véhicules électriques. La limitation énergétique de ces batteries est en grande partie liée aux performances des matériaux qui les composent. Les matériaux d'électrode négative actuellement disponibles ont généralement une capacité spécifique comprise entre 300 à 350 Ah/kg. Celle-ci est de l'ordre de 100 et 150 Ah/kg seulement pour les matériaux de l'électrode positive.

L'utilisation d'une électrode à air en tant qu'électrode positive permettrait de dépasser cette limite supérieure et d'augmenter ainsi la capacité massique de l'accumulateur.

La demande de brevet français FR 2 870 639 au nom de la Demanderesse décrit une électrode pour accumulateurs lithium-ion ou lithium-métal caractérisée par la présence, à la surface du collecteur d'électrons, d'une couche de matière électrochimiquement active « nanostructurée » contenant des nanoparticules formées par un composé, par exemple un oxyde, du métal ou des métaux formant le collecteur d'électrons. La structure particulière de la matière électrochimiquement active permet d'améliorer les performances en termes de puissance et de densité d'énergie massique.

La demande de brevet FR 2901641, également au nom de la Demanderesse, concerne une amélioration de l'électrode décrite dans FR 2 870 639. Cette amélioration réside dans la structure textile de ladite électrode et aboutit à une amélioration significative de la densité d'énergie massique des batteries la contenant. Chacun des fils de la structure textile, qui est de préférence une structure tissée, est constitué d'une partie métallique centrale (collecteur d'électrons) et d'une couche de conversion superficielle « nanostructurée » (matière électro-chimiquement active).

Lorsque la Demanderesse a tenté d'associer les électrodes nanostructurées décrites dans les demandes FR 2 870 639 et FR 2901641, en tant qu'électrodes négatives, à une électrode positive de type électrode à air, elle a été confrontée à un problème d'instabilité de l'électrode négative. En effet, l'utilisation d'une électrode à air suppose la présence d'un électrolyte aqueux. Si l'électrode négative vient en contact avec l'eau de l'électrolyte aqueux, ceci conduit à la réduction de l'eau en hydrogène et à une corrosion irréversible de l'électrode négative.

Il s'est dont avéré nécessaire de trouver un moyen pour séparer efficacement une électrode négative du type de celles décrites dans les demandes FR 2 870 639 et FR 2901641, d'un électrolyte aqueux contenant du lithium, indispensable au fonctionnement d'une électrode positive du type électrode à air.

Cette séparation a été possible grâce à l'utilisation d'un électrolyte solide, conducteur d'ions lithium, déposé sous forme d'une fine couche sur la surface de l'anode nanostructurée.

La présente invention a par conséquent pour objet un demi-accumulateur comprenant
(a) une électrode formée par un collecteur d'électrons contenant un ou plusieurs métaux de transition des groupes 4 à 12 de la Classification Périodique des Elements, et par une matière électrochimiquement active, présente à la surface du collecteur d'électrons sous forme d'une couche de conversion nanostructurée contenant des nanoparticules ayant un diamètre moyen compris entre 1 et 1000 nm, ladite matière électrochimiquement active contenant au moins un composé du métal de transition ou des métaux de transition présent(s) dans le collecteur d'électrons, et
(b) une couche continue d'un électrolyte solide, conducteur d'ions lithium, imperméable à l'eau et à l'air, déposée directement sur et recouvrant totalement la surface de la matière active nanostructurée de l'électrode (a), ladite couche continue d'électrolyte solide ayant une épaisseur comprise entre 1 et 50 µm.

L'invention a également pour objet un générateur électrochimique contenant au moins un tel demi-accumulateur, en tant qu'électrode négative.

Comme expliqué dans la demande de brevet FR 2 870 639, la couche nanostructurée contenant des nanoparticules d'au moins un composé d'un métal de transition présent dans le collecteur d'électrons est une couche de conversion, c'est-à-dire une couche obtenue par transformation chimique ou électrochimique de la surface du matériau métallique formant le collecteur de courant. Les avantages connus d'une telle couche de conversion sont en particulier la bonne adhérence de la couche de surface formée et la grande facilité avec laquelle une telle couche peut être fabriquée par simple traitement du métal de départ.

Dans un mode de réalisation préféré de la présente invention, l'électrode (a) a une structure textile constituée de fils métalliques avec une couche de conversion superficielle nanostructurée, formant la matière active de l'électrode.

Aux avantages connus des couches de conversion s'ajoute alors un avantage particulier lié à la structure fine textile de l'électrode. En effet, lors de la formation de la matière électrochimiquement active, la structure textile de l'électrode est conservée, c'est-à-dire les ouvertures ou mailles du tissu ne risquent pas d'être obturées par le dépôt d'une matière active. Une telle obturation réduirait en effet les avantages inhérents à une telle structure textile. Ce risque d'obturation des ouvertures du textile est bien évidemment d'autant plus fort que les ouvertures sont petites. La préparation de la matière active par formation d'une couche de conversion limite le risque d'obturation des ouvertures du textile car aucun métal ni autre matériau n'est apporté de l'extérieur et les dimensions microscopiques (diamètre et espacement des fils) de l'électrode (collecteur d'électrons + matière active) sont ainsi sensiblement identiques à celles du textile métallique de départ utilisé.

Le textile de fils métalliques utilisé pour former l'électrode selon l'invention peut être un textile tissé, non-tissé ou tricoté. Il s'agit de préférence d'un textile tissé.

Le textile métallique utilisé pour former l'électrode de la présente invention est de préférence formé de fils très fins, relativement peu espacés les uns des autres. En effet, plus les fils sont fins et plus le nombre de fils par unité de surface est important, plus la surface spécifique BET (Brunauer, Emmet Teller) de l'électrode est élevée.

De manière générale, le diamètre équivalent de la section transversale des fils ou fibres métalliques formant le textile de départ ou des fils de l'électrode textile couverts d'une couche de conversion de matière active est compris entre 3 µm et 1 mm, de préférence entre 7 µm et 100 µm et en particulier entre 10 µm et 50 µm. On entend par « diamètre équivalent » le diamètre du cercle possédant la même surface que la section des fils.

Le faible diamètre équivalent des fils formant l'électrode de la présente invention permet avantageusement de limiter la masse de celle-ci, en vue de son utilisation dans des accumulateurs. Ainsi, l'électrode selon l'invention, constituée du collecteur d'électrons couvert d'une couche de conversion, présente avantageusement une masse surfacique inférieure à 1000 g/m² de surface géométrique, de préférence comprise entre 10 et 500 g/m² de surface géométrique, la surface géométrique étant la surface du tissu métallique à l'échelle macroscopique. Cette surface géométrique est donc indépendante de la structure fine du textile.

Le métal de transition ou les métaux de transition du collecteur d'électrons sont de préférence choisis dans le groupe formé par le nickel, le cobalt, le manganèse, le cuivre, le chrome et le fer. Parmi ceux-ci, on préfère en particulier le fer.

Lors de la formation de la couche de conversion formant la matière active, ces métaux sont convertis par un traitement approprié, décrit plus en détail ci-après, en un composé dudit ou desdits métaux de transition. Ce composé est choisi avantageusement parmi les chalcogénures et les halogénures, de préférence parmi les chalcogénures (oxygène, soufre, sélénium et tellure), et de manière particulièrement préférée le composé métallique présent dans la couche de conversion est un oxyde métallique.

Dans un mode de réalisation particulièrement préféré de l'invention, l'oxyde métallique répond à la formule

MₓO_{y},

où 1 ≤ x ≤ 3 et 1 ≤ y ≤ 5, de préférence 1 ≤ y ≤ 4, et M est au moins un métal de transition. Ce composé est choisi de préférence dans le groupe formé par les structures spinelles AB₂O₄, où A est au moins un métal de transition choisi dans le groupe formé par Fe, Mn, Cr, Ni, Co et Cu, et B est au moins un métal choisi dans le groupe formé par Fe, Cr et Mn, et/ou dans le groupe formé par les sesquioxydes M'₂O₃, où M' est au moins un métal de transition choisi dans le groupe formé par Fe, Mn, Cr, Ni, Co et Cu.

Le composé de métal de transition est en particulier du Cr₂O₃ ou un composé répondant à la formule

Fe_{x'}Cr_{y'}Mn_{z'}O₄,

où : 0 ≤ x' ≤ 1, 0 ≤ z' ≤ 1, et x' + y' + z' = 3.

De préférence, la valence de M est égale à 2 ou 3, en particulier égale à 3. Les composés de formule Fe_{x'}Cr_{y'}Mn_{z'}O₄ englobent par exemple les composés de formule Fe_{x'}Cr_{1-x'}Cr₂O₄ où x' a la valeur indiquée ci-dessus, et les composés de formule Fe_{x'}Ni_{1-x'}O₄ où x' a la valeur indiquée ci-dessus.

Comme indiqué précédemment, la couche de conversion de l'électrode textile utilisée dans la présente invention est une couche « nanostructurée » contenant des nanoparticules ayant un diamètre moyen compris entre 1 et 1000 nm, de préférence entre 10 à 300 nm. Une telle couche nanostructurée se distingue par une structure rugueuse et poreuse, et contient au moins 50 % en poids, de préférence au moins 70 % en poids de nanoparticules

Dans la couche de conversion de l'électrode textile, les nanoparticules sont de préférence regroupées et agglomérées les unes aux autres, les agglomérats ayant de préférence une taille moyenne comprise entre 1 et 10000 nm, en particulier entre 10 et 3000 nm. La structure poreuse à base d'agglomérats de nanoparticules peut être mise en évidence par exemple par microscopie électronique à balayage.

La couche de conversion (matière électro-chimiquement active) recouvre de préférence entièrement la surface du collecteur d'électrons et a de préférence une épaisseur comprise entre 30 nm et 15000 nm, en particulier entre 30 nm et 12000 nm.

Selon un mode de réalisation particulièrement intéressant, le collecteur d'électrons est un tissu formé d'un alliage à base de fer tréfilable en fils très fins tel que les aciers austénitiques comme l'acier 316 L.

Les tissus métalliques à base de métaux de transition susceptibles d'être utilisés, après formation d'une couche de conversion nanostructurée telle que décrite ci-dessus, en tant qu'électrode négative d'un accumulateur sont connus dans la technique et sont disponibles sur le marché par exemple sous les dénominations suivantes : maille carrée unie, maille carrée croisée, reps de trame uni, reps de trame croisé, reps de chaîne uni, reps de chaîne croisé.

La formation de la couche de conversion nanostructurée est décrite dans la demande FR 2 870 639. Le traitement utilisé dans ce document peut être appliqué sans autres précautions ou modifications aux textiles métalliques décrits ci-dessus. Ledit traitement de conversion est par exemple un traitement thermique à haute température sous atmosphère réductrice, neutre ou oxydante. Ces traitements sont des traitements connus de l'homme du métier et sont mis en oeuvre couramment.

Il peut s'agir par exemple d'un traitement sous hydrogène à une température comprise entre 500 et 1000°C, de préférence entre 600 et 800°C, par exemple à une température voisine de 700°C, pendant une durée allant de 1h à 16h.

Il peut également s'agir d'un traitement thermique sous air à une température comprise par exemple entre 600 et 1200°C, de préférence entre 800 et 1150°C, par exemple à une température proche de 1000°C, pendant une durée allant de 1 min à 16h.

La couche de conversion formée à l'issue du traitement thermique oxydant ou réducteur ne présente généralement pas la structure nanostructurée définitive recherchée. La nanostructuration finale de l'électrode, c'est-à-dire la formation de nanoparticules, ne se produit que lors de la première décharge de l'accumulateur. On peut bien entendu soumettre l'électrode textile à une telle décharge avant de l'incorporer dans un accumulateur au lithium. Cette première décharge peut se faire par exemple par réduction de l'électrode textile par rapport à une électrode de lithium dans un électrolyte organique chargé en sel de lithium, à une densité de courant réduite (0,05 à 0,5 mA/cm² de surface géométrique d'électrode) jusqu'à un potentiel de 20 mV par rapport au lithium, puis oxydation de la dite électrode textile à une densité de courant réduite (0,05 à 0,5 mA/cm² de surface géométrique d'électrode) jusqu'à un potentiel de 3000 mV par rapport au lithium.

L'électrode négative utilisée dans la présente invention est revêtue, sur toute sa surface susceptible de venir en contact avec un électrolyte liquide, d'un électrolyte solide conducteur d'ions lithium. Cet électrolyte solide doit être imperméable à l'eau et à l'air dans les conditions d'utilisation du générateur électrochimique. Il est déposé directement sur la couche de conversion nanostructurée de l'électrode.

Dans un mode de réalisation préféré de la présente invention, l'électrolyte solide conducteur d'ions lithium est une matière céramique.

Les matériaux céramiques susceptibles de former l'électrolyte solide, conducteur d'ions lithium sont connus en tant que tels. Ils sont commercialisés par exemple sous les dénominations LISICON (Lithium Super Ionic Conductor) et LIC-GC par la société OHARA. Il s'agit de matériaux ayant par exemple la composition suivante :
Li₁₊ₓ (M, Al, Ga) ₓ(Ge_{1-y}Ti_{y})₂₋ₓ(PO₄)₃ ou Li₁₊ₓAlₓTi₂₋ₓ(PO₄)₃ Ces matériaux sont décrits par exemple dans l'article de J. Fu, Solid State Ionics, 96, (1997), pages 195-200. Ils peuvent être déposés en couche mince par électrophorèse ou par pulvérisation cathodique.

Dans un autre mode de réalisation, l'électrolyte solide, conducteur d'ions lithium, est formé par une couche, microporeuse ou non poreuse, d'un polymère hydrophobe imbibé, après dépôt sur l'électrode négative, avec un liquide ionique hydrophobe contenant un sel de lithium non hydrolysable.

Cette couche microporeuse de polymère hydrophobe peut être déposée par exemple par trempage de l'électrode négative dans une solution constituée d'acétone, de carbonate de propylène et de PVDF-HFP, suivi d'une étape d'évaporation de l'acétone, puis du carbonate de propylène à 120°C sous vide.

Une couche non poreuse de polymère peut être déposée par exemple par un procédé de cataphorèse (champ électrique de 2 à 10V/cm appliqué 2 à 300 secondes) d'une résine époxy modifiée par des amines, telle que le CATOLAC ED 5000 fourni par la société PPG, puis réticulation (par exemple 150°C pendant 15 minutes).

On peut citer à titre d'exemples de liquides ioniques hydrophobes le bis(trifluorométhanesulfonyl)imide de 1-éthyl-3-méthyl-imidazolium (EMI TFSI), le bis(trifluorométhane-sulfonyl)imide de 1-propyl-3-méthyl-imidazolium (PMI TFSI), le bis(pentafluoroéthanesulfonyl)imide de 1-éthyl-3-méthyl-imidazolium (EMI BETI) ou le bis(pentafluoroéthanesulfonyl)imide de 1-propyl-3-méthyl-imidazolium (PMI BETI), ou un mélange de ceux-ci. Le liquide ionique hydrophobe contient en outre de préférence de 0,1 à 1 M d'un sel de lithium non hydrolysable tel que le bis(trifluoro-méthanesulfonyl)-imide de lithium (LiTFSI), le bis(pentafluoroéthanesulfonyl)imide de lithium (LiBETI) ou le bis(flurosilfonyl)imide de lithium (LiFSI).

La couche d'électrolyte solide, conducteur d'ions lithium recouvrant la matière active de l'électrode négative a de préférence une épaisseur comprise entre 1 et 50 µm, en particulier comprise entre 1,5 et 30 µm et idéalement entre 2 et 10 µm.

Lorsque l'électrode négative est une électrode textile, il n'est pas toujours essentiel que ladite structure textile de l'électrode soit encore apparente après le dépôt de l'électrolyte solide. Autrement dit, celui-ci peut combler une partie, voire la totalité, des ouvertures ou mailles de l'électrode négative, le demi-accumulateur apparaissant alors sous la forme d'une feuille continue renfermant l'électrode textile décrite.

Toutefois, dans un mode de réalisation particulier du demi-accumulateur de la présente invention, l'épaisseur de la couche de l'électrolyte solide conducteur d'ions lithium est suffisamment fine pour ne pas fermer les mailles de la structure textile de l'électrode, autrement dit la structure textile de l'électrode est alors encore visible après dépôt de l'électrolyte solide et le demi-accumulateur a l'apparence d'une grille, par exemple d'une grille quadrillée. Cette structure ajourée du demi-accumulateur est utile lorsque, dans un générateur électrochimique contenant un empilement de plusieurs demi-accumulateurs, la direction de conduction est perpendiculaire au plan desdits demi-accumulateurs empilés.

L'électrolyte solide déposé en une fine couche à la surface de l'électrode négative nanostructurée doit suivre les variations de volume, parfois importantes, de celle-ci sans se fissurer. La fissuration de l'électrolyte solide aboutirait en effet rapidement à une dégradation de l'électrode négative. Or, la nature céramique de l'électrolyte solide pourrait être responsable d'une élasticité insuffisante pour supporter les variations de volume de l'électrode.

Afin de résoudre ce problème et prévenir la fissuration de l'électrolyte solide, celui-ci est déposé sur la surface nanostructurée de l'électrode négative en plusieurs zones, voisines les unes des autres, séparées par des vides de faible étendue qui seront remplis, dans un deuxième temps, par un matériau insoluble dans et imperméable à l'électrolyte liquide et qui a une déformabilité, plastique ou élastique, supérieure à celle de l'électrolyte solide. Un tel matériau peut être par exemple un polymère organique hydrophobe, de préférence un polymère organique réticulé. Les zones vides, remplies par ledit matériau polymère hydrophobe couvrent de préférence moins de 20 %, de préférence moins de 10 % de la surface nanostructurée de l'électrode négative.

Lorsqu'il est question, dans la présente invention d'une « couche continue d'un électrolyte solide recouvrant totalement la surface de la matière active nanostructurée de l'électrode » cela englobe également ce mode de réalisation où, dans certaines zones de la couche, l'électrolyte solide est remplacé par un matériau polymère hydrophobe, capable d'absorber les variations de volume de l'électrode. Ce polymère est de préférence déposé dans les interstices non couverts par la céramique, par un procédé de cataphorèse. L'homme du métier comprendra en effet qu'il est essentiel pour le bon fonctionnement du générateur électrique que l'électrolyte liquide aqueux ne vienne pas en contact avec l'électrode négative et que ce contact peut être empêché
- soit par une couche continue d'un électrolyte solide conducteur d'ions lithium,
- soit par une couche continue formée par un dépôt discontinu d'un l'électrolyte solide conducteur d'ions lithium et d'un matériau polymère hydrophobe imperméable à l'électrolyte aqueux, ce matériau polymère hydrophobe comblant les discontinuités de l'électrolyte solide conducteur d'ions.

Comme indiqué en introduction, la présente invention a en outre pour objet un générateur électrochimique contenant un ou plusieurs demi-accumulateurs tels que décrits ci-dessus.

Un tel générateur électrochimique comprend, en plus d'un ou plusieurs demi-accumulateurs tels que décrits ci-dessus :
- un électrolyte aqueux contenant du LiOH, dans lequel est immergé le demi-accumulateur,
- une électrode à air, en contact avec l'électrolyte aqueux contenant du LiOH, et
- une électrode de dégagement d'oxygène, également en contact avec l'électrolyte aqueux contenant du LiOH.

L'électrode à air joue le rôle d'électrode positive pendant la décharge du générateur électrique (réduction de l'oxygène de l'air en ions hydroxyde). Les électrodes à air sont connues. On utilisera de préférence dans la présente invention une électrode à air constituée (i) d'une poudre de carbone sur laquelle sont dispersées de fines particules d'un catalyseur, par exemple du dioxyde de manganèse, une porphyrine de cobalt (CoTMPP) pyrolysée, du platine ou de l'argent, (ii) d'un liant organique hydrophobe, par exemple du poly(tétrafluoroéthylène), et (iii) d'un séparateur microporeux qui a pour fonction d'isoler électriquement l'électrode à air de l'électrode de dégagement d'oxygène tout en permettant la pénétration de l'électrolyte aqueux. On peut citer à titre d'exemple d'un tel séparateur microporeux, le produit commercial Celgard^{®}, un matériau microporeux à base de polyéthylène/polypropylène.

Des électrodes à air appropriées sont commercialisées par exemple par les sociétés E-TEK et Electric Fuel Ltd (Arotech Corporation) et décrites par exemple dans la demande internationale WO2000/036676.

L'électrode de dégagement d'oxygène remplace l'électrode à air pendant le rechargement du générateur électrique. Elle est constituée d'un métal ne subissant pas de corrosion par l'électrolyte aqueux, par exemple un acier inoxydable tel que l'acier 316L. Un catalyseur, par exemple un oxyde métallique tel que NiCo₂O₄, peut être déposé à la surface de cette électrode, par exemple par électrophorèse ou pyrolyse par pulvérisation, afin de réduire les surtensions de dégagement d'oxygène.

L'électrolyte aqueux, dans lequel sont immergés le ou les demi-accumulateurs, l'électrode à air et l'électrode de dégagement d'oxygène, est une solution aqueuse de lithine (LiOH).

La capacité surfacique de l'électrode à air d'un générateur électrochimique selon l'invention n'est pas limitative de la capacité du générateur car l'oxygène n'est pas stocké sur place mais prélevé dans l'air.

L'électrode négative par contre, même lorsqu'il s'agit d'une électrode textile, a une capacité surfacique limitée, comprise entre 0,5 et 5 mAh/cm², le plus souvent entre 1 et 2 mAh/cm².

Afin d'augmenter le plus possible la capacité du générateur électrochimique, il est donc fortement recommandé d'utiliser une pluralité de demi-accumulateurs (constitués chacun d'une électrode, de préférence textile, avec une couche de conversion nanostructurée et revêtue d'un électrolyte solide conducteur d'ions lithium). Ces demi-accumulateurs sont de préférence empilés et assemblés électriquement en parallèle. L'assemblage ainsi obtenu est plongé dans l'électrolyte aqueux constitué d'une solution aqueuse de LiOH. Il est possible d'ajouter un sel support, par exemple du KOH, afin d'assurer une bonne conductivité ionique de l'électrolyte aqueux en fin de cycle de chargement, lorsque la concentration de LiOH est la plus faible. Lorsque la direction de diffusion des cations Li⁺ est perpendiculaire au plan des demi-accumulateurs empilés, il est important que ces derniers aient une structure ajourée, c'est-à-dire que l'électrolyte solide ait été déposé en une couche suffisamment fine pour conserver la structure ajourée de l'électrode textile. Ceci est nécessaire pour garantir la libre diffusion des ions Li⁺ et OH⁻ et empêcher la formation d'un gradient de concentration qui se traduirait par un accroissement de la résistance interne de l'accumulateur.

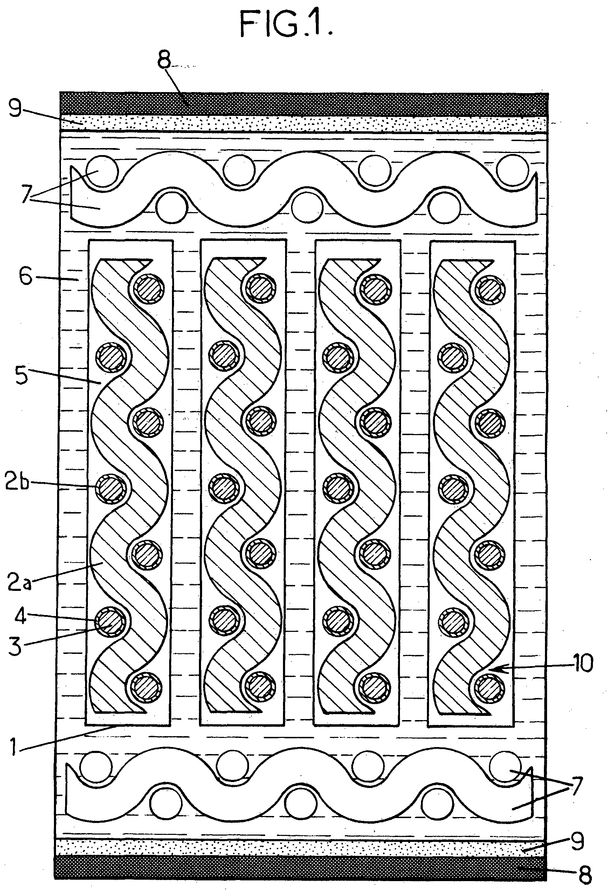

En revanche, lorsque le chemin de diffusion des ions lithium est parallèle au plan des demi-accumulateurs empilés, comme dans la Figure 1 ci-après, les ions hydroxyde et lithium peuvent migrer librement entre ces demi-accumulateurs et l'électrode à air ou l'électrode de dégagement d'oxygène par les interstices séparant les demi-accumulateurs.

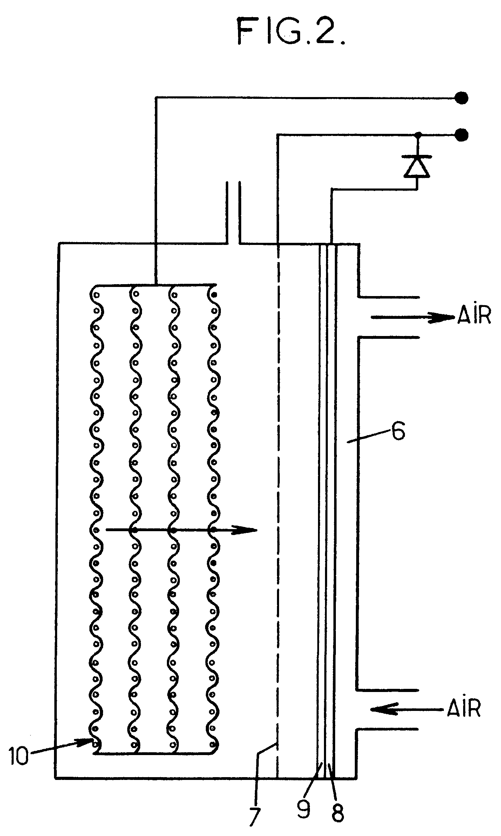

L'invention est décrite plus en détail à l'aide de deux modes de réalisations représentés respectivement sur les Figures 1 et 2.

La Figure 1 montre un générateur électrochimique de la présente invention contenant quatre demi-accumulateurs 1. Chaque demi-accumulateur est formé par une électrode textile tissée 10 composée de fils de chaîne 2a et de fils de trame 2b. Chacun des fils de chaîne et de trame est constitué d'une partie centrale correspondant au collecteur d'électrons 3 et d'une partie périphérique correspondant à la matière électrochimiquement active 4. La section transversale des électrodes textiles passe ici entre deux fils de chaîne voisins, et le collecteur d'électrons 3 n'est par conséquent visible que sur les fils de trame 2b de la structure tissée. Chaque électrode textile est entourée d'un électrolyte solide 5 qui enferme totalement l'électrode textile de manière à l'isoler de l'électrolyte liquide aqueux 6 dans lequel sont immergés les quatre demi-accumulateurs 1. Le dépôt d'électrolyte solide 5 est ici tel que le demi-accumulateur a une structure pleine, et non pas une structure ajourée de type grille reflétant la structure textile de l'électrode 10 qu'il renferme.

Sont également immergés dans l'électrolyte liquide aqueux 6 (LiOH) deux électrodes de dégagement d'oxygène 7 qui, comme les électrodes nanostructurées 10 (électrodes négatives), ont une structure textile tissée. Les électrodes de dégagement d'oxygène 7 sont constituées d'acier inoxydable mais, contrairement aux électrodes négatives, ne comportent pas de couche de conversion nanostructurée. Le générateur électrochimique comporte également deux électrodes à air 8, séparées de l'électrolyte liquide aqueux 6 par une couche 9 qui peut être un séparateur microporeux ou un polymère anionique. Dans ce mode de réalisation, la direction de conduction générale est parallèle au plan des quatre demi-accumulateurs 1 empilés et perpendiculaire au plan de l'électrode de dégagement d'oxygène 7. Les ions Li⁺ et OH⁻ peuvent par conséquent migrer librement dans l'électrolyte liquide dans les espaces entre les demi-accumulateurs 1 et ne sont pas gênés par le fait que ces derniers n'ont pas une structure ajourée de type grille. La structure textile de l'électrode à dégagement d'oxygène 7 garantit la libre circulation des cations et anions entre les électrodes nanostructurées 10 et l'électrode à air 8, pendant la phase de décharge.

La Figure 2 montre un mode de réalisation d'un générateur électrochimique selon la présente invention qui diffère de celui de la Figure 1 principalement par la disposition relative des différentes électrodes. Dans ce mode de réalisation, les quatre demi-accumulateurs 1 sont disposés parallèlement les uns aux autres. Ils sont également parallèles à l'électrode de dégagement d'oxygène 7 et à l'électrode à air 8. La direction de diffusion des ions Li⁺ et OH⁻ est donc ici perpendiculaire au plan des demi-accumulateurs et ceux-ci doivent avoir une structure ajourée, c'est-à-dire le dépôt de l'électrolyte solide doit être suffisamment fin pour que les ouvertures de la structure textile de l'électrode négative 10 ne soient pas bouchées.

## Revendications

1. Demi-accumulateur comprenant
(a) une électrode formée par un collecteur d'électrons contenant un ou plusieurs métaux de transition des groupes 4 à 12 de la Classification Périodique des Eléments choisis dans le groupe formé par le nickel, le cobalt, le manganèse, le cuivre, le chrome et le fer, et par une matière électrochimiquement active, présente à la surface du collecteur d'électrons sous forme d'une couche de conversion nanostructurée contenant des nanoparticules ayant un diamètre moyen compris entre 1 et 1000 nm, ladite matière électrochimiquement active contenant au moins un composé du métal de transition ou des métaux de transition présent(s) dans le collecteur d'électrons, et
(b) une couche continue d'un électrolyte solide, conducteur d'ions lithium, imperméable à l'eau et à l'air, déposée directement sur et recouvrant totalement la surface de la matière active nanostructurée de l'électrode (a), ladite couche continue d'électrolyte solide ayant une épaisseur comprise entre 1 et 50 µm.

2. Demi-accumulateur selon la revendication 1, **caractérisé par le fait que** l'électrode (a) a une structure textile constituée de fils métalliques avec une couche de conversion superficielle nanostructurée, formant la matière active de l'électrode.

3. Demi-accumulateur selon la revendication 1 ou 2, **caractérisé par le fait que** la structure textile est une structure tissée.

4. Demi-accumulateur selon la revendication 2 ou 3, **caractérisé par le fait que** le diamètre équivalent de la section transversale des fils métalliques couverts d'une couche de conversion de matière active est compris entre 3 µm et 1 mm, de préférence entre 7 µm et 100 µm et en particulier entre 10 µm et 50 µm.

5. Demi-accumulateur selon l'une quelconque des revendications précédentes, **caractérisé par le fait que** l'électrolyte solide conducteur d'ions lithium est une matière céramique.

6. Demi-accumulateur selon l'une quelconque des revendications 1 à 4, **caractérisé par le fait que** l'électrolyte solide conducteur d'ions lithium est une couche d'un polymère hydrophobe imbibé avec un liquide ionique hydrophobe contenant un sel de lithium non hydrolysable.

7. Demi-accumulateur selon l'une quelconque des revendications précédentes, **caractérisé par le fait que** la couche d'électrolyte conducteur d'ions lithium (b) a une épaisseur comprise de préférence entre 1,5 et 30 µm et en particulier entre 2 et 10 µm.

8. Demi-accumulateur selon l'une quelconque des revendications 2 à 7, **caractérisé par le fait que** l'épaisseur de la couche d'électrolyte solide conducteur d'ions lithium (b) est suffisamment fine pour ne pas fermer les mailles de la structure textile formée par l'électrode (a).

9. Demi-accumulateur selon l'une quelconque des revendications précédentes, **caractérisé par le fait que** le collecteur d'électrons contient du fer et que la couche de conversion superficielle formant la matière active contient de l'oxyde de fer.

10. Générateur électrochimique contenant
- au moins un demi-accumulateur selon l'une quelconque des revendications précédentes
- un électrolyte aqueux contenant du LiOH,
- une électrode à air, en contact avec l'électrolyte aqueux contenant du LiOH, est
- une électrode de dégagement d'oxygène, en contact avec l'électrolyte aqueux contenant du LiOH.

11. Générateur électrochimique selon la revendication 10, **caractérisé par le fait que** l'électrolyte aqueux contenant du LiOH est une solution aqueuse de LiOH.

## Patentansprüche

1. Halb-Akkumulator, welcher aufweist:
(a) eine Elektrode, die gebildet wird von einem Elektronenkollektor, der ein oder mehrere Übergangsmetall(e) der Gruppen 4 bis 12 des Periodensystems der Elemente enthält, die aus der Gruppe ausgewählt sind, die von Nickel, Cobalt, Mangan, Kupfer, Chrom und Eisen gebildet wird, und von einem elektrochemisch aktiven Material, das an der Oberfläche des Elektronenkollektors in Form einer nanostrukturierten Konversionsschicht vorliegt, die Nanopartikel mit einem mittleren Durchmesser zwischen 1 und 1000 nm enthält, wobei das elektrochemisch aktive Material wenigstens eine Verbindung des Übergangsmetalls oder der Übergangsmetalle, das (die) in dem Elektronenkollektor vorliegt (vorliegen), enthält, und
(b) eine durchgehende Schicht eines festen Elektrolyten, der Lithiumionen leitet, für Wasser und für Luft undurchlässig ist und direkt auf die Oberfläche des nanostrukturierten aktiven Materials der Elektrode (a) abgeschieden ist und diese vollständig bedeckt, wobei die durchgehende Schicht des festen Elektrolyten eine Dicke zwischen 1 und 50 µm aufweist.

2. Halb-Akkumulator nach Anspruch 1, **dadurch gekennzeichnet, dass** die Elektrode (a) eine textile Struktur aufweist, die aus Metallfäden mit einer nanostrukturierten Oberflächen-Konversionsschicht, die das aktive Material der Elektrode bildet, besteht.

3. Halb-Akkumulator nach Anspruch 1 oder 2, **dadurch gekennzeichnet, dass** die textile Struktur eine Gewebestruktur ist.

4. Halb-Akkumulator nach Anspruch 2 oder 3, **dadurch gekennzeichnet, dass** der äquivalente Durchmesser des Querschnitts der Metallfäden, die von einer Konversionsschicht aus aktivem Material bedeckt sind, zwischen 3 µm und 1 mm, vorzugsweise zwischen 7 µm und 100 µm und insbesondere zwischen 10 µm und 50 µm liegt.

5. Halb-Akkumulator nach einem der vorhergehenden Ansprüche, **dadurch gekennzeichnet, dass** der Lithiumionen leitende feste Elektrolyt (b) ein Keramikmaterial ist.

6. Halb-Akkumulator nach einem der Ansprüche 1 bis 4, **dadurch gekennzeichnet, dass** der Lithiumionen leitende feste Elektrolyt eine Schicht eines hydrophoben Polymers ist, das mit einer hydrophoben ionischen Flüssigkeit getränkt ist, die ein nicht hydrolysierbares Lithiumsalz enthält.

7. Halb-Akkumulator nach einem der vorhergehenden Ansprüche, **dadurch gekennzeichnet, dass** die Schicht eines Lithiumionen leitenden Elektrolyten (b) eine Dicke aufweist, die vorzugsweise zwischen 1,5 und 30 µm und insbesondere zwischen 2 und 10 µm liegt.

8. Halb-Akkumulator nach einem der Ansprüche 2 bis 7, **dadurch gekennzeichnet, dass** die Dicke der Schicht eines Lithiumionen leitenden festen Elektrolyten (b) ausreichend gering ist, um nicht die Maschen der von der Elektrode (a) gebildeten textilen Struktur zu verschließen.

9. Halb-Akkumulator nach einem der vorhergehenden Ansprüche, **dadurch gekennzeichnet, dass** der Elektronenkollektor Eisen enthält und dass die Oberflächen-Konversionsschicht, die das aktive Material bildet, Eisenoxid enthält.

10. Elektrochemischer Generator, welcher enthält:
- wenigstens einen Halb-Akkumulator nach einem der vorhergehenden Ansprüche,
- einen wässrigen Elektrolyten, der LiOH enthält,
- eine Luftelektrode, die sich mit dem LiOH enthaltenden wässrigen Elektrolyten in Kontakt befindet, und
- eine Sauerstoff freisetzende Elektrode, die sich mit dem LiOH enthaltenden wässrigen Elektrolyten in Kontakt befindet.

11. Elektrochemischer Generator nach Anspruch 10, **dadurch gekennzeichnet, dass** der LiOH enthaltende wässrige Elektrolyt eine wässrige Lösung von LiOH ist.

## Claims

1. A half-cell comprising:
(a) an electrode formed of an electron collector containing one or more transition metals from groups 4 to 12 of the Period Table of the Elements chosen in the group formed by nickel, cobalt, manganese, copper, chromium and iron, and of an electrochemically active material present on the surface of the electron collector in the form of a nanostructured conversion film containing nanoparticles having an average diameter of between 1 nm and 1000 nm, said electrochemically active material containing at least one compound of the transition metal or the transition metals present in the electron collector; and
(b) a continuous film of a lithium-ion conductive, solid electrolyte that is water- and air-impermeable and that is deposited directly onto, covering totally, the surface of the nanostructured active material of the electrode (a), said continuous film of solid electrolyte having a thickness of between 1 µm and 50 µm.

2. The half-cell as claimed in claim 1, **characterized in that** the electrode (a) has a textile structure formed from metal wires with a nanostructured surface conversion film, forming the active material of the electrode.

3. The half-cell as claimed in either of claims 1 and 2, **characterized in that** the textile structure is a woven structure.

4. The half-cell as claimed in either of claims 2 and 3, **characterized in that** the equivalent diameter of the cross section of the metal wires covered with an active material conversion film is between 3 µm and 1 mm, preferably between 7 µm and 100 µm and in particular between 10 µm and 50 µm.

5. The half-cell as claimed in any one of the preceding claims, **characterized in that** the lithium-ion conductive, solid electrolyte is a ceramic.

6. The half-cell as claimed in any one of claims 1 to 4, **characterized in that** the lithium-ion conductive, solid electrolyte is a film of a hydrophobic polymer imbibed with a hydrophobic ionic liquid containing a nonhydrolyzable lithium salt.

7. The half-cell as claimed in any one of the preceding claims, **characterized in that** the lithium-ion conductive, electrolyte film (b) has a thickness comprised preferably between 1.5 µm and 30 µm and in particular between 2 µm and 10 µm.

8. The half-cell as claimed in any one of claims 2 to 7, **characterized in that** the thickness of the lithium-ion conductive solid electrolyte film (b) is sufficiently small that the apertures in the textile structure formed by the electrode (a) are not closed.

9. The half-cell as claimed in any one of the preceding claims, **characterized in that** the electron collector contains iron and **in that** the surface conversion film forming the active material contains iron oxide.

10. An electrochemical generator containing
- at least one half-cell as claimed in any one of the preceding claims
- an aqueous electrolyte containing LiOH;
- an air electrode, in contact with the aqueous electrolyte containing LiOH; and
- an oxygen-emitting electrode, in contact with the aqueous electrolyte containing LiOH.

11. The electrochemical generator as claimed in claim 10, **characterized in that** the aqueous electrolyte containing LiOH is an aqueous solution of LiOH.
